Europäisches Patentamt

European Patent Office

Office européen des brevets

(11) Veröffentlichungsnummer: **0 184 768**
**B1**

(12) **EUROPÄISCHE PATENTSCHRIFT**

(45) Veröffentlichungstag der Patentschrift: **31.10.90**

(21) Anmeldenummer: **85115391.6**

(22) Anmeldetag: **04.12.85**

(51) Int. Cl.⁵: **B 32 B 31/20**, B 32 B 27/12,
B 32 B 5/18, B 29 C 65/08

(54) Verfahren zur Herstellung von Schichtstoffen.

(30) Priorität: **08.12.84 DE 3444785**

(43) Veröffentlichungstag der Anmeldung:
**18.06.86 Patentblatt 86/25**

(45) Bekanntmachung des Hinweises auf die
Patenterteilung:
**31.10.90 Patentblatt 90/44**

(84) Benannte Vertragsstaaten:
**DE FR GB IT NL**

(56) Entgegenhaltungen:
**EP-A-0 022 896**
**DE-A-2 303 481**
**DE-A-2 540 467**
**US-A-3 956 046**

(73) Patentinhaber: **BASF Aktiengesellschaft**
**Carl-Bosch-Strasse 38**
**D-6700 Ludwigshafen (DE)**

(72) Erfinder: **Kroebl, Karl, Dr.**
**Kaiserslauterer Strasse 28**
**D-6702 Bad Duerkheim (DE)**
Erfinder: **Wald, Hans Hubert**
**Neuhausener Weg 4**
**D-6700 Ludwigshafen (DE)**
Erfinder: **Welz, Martin**
**Kaiserslauterer Strasse 231**
**D-6702 Bad Duerkheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 184 768 B1

# Beschreibung

Die Erfindung bezieht sich auf ein Verfahren zur Herstellung von Schichtstoffen, bei dem eine Schicht A aus einem faserverstärken und ggf. füllstoffhaltigen thermoplastischen Kunststoff sowie eine Schicht B aus einem geschäumten Kunststoff oder einem textilen Flächengebilde miteinander verbunden werden.

Schichtstoffe dieser Art sind bekannt. Nach dem Verfahren gemäß den DE—A—23 03 481 und 27 27 285 werden zwei oder mehrere Schichten erwärmt, in Kontakt miteinander gebracht und verpreßt. Im allgemeinen wird dabei die aus einem gefüllten oder faserverstärkten Thermoplasten bestehende Schicht erwärmt und mittels gekühlter Pressen, Walzen oder Druckbändern mit dem Schaumstoff bzw. mit dem textilen Flächengebilde verbunden.

Aus der DE—A—25 45 700 ist ein Verfahren zur Herstellung von selbsttragenden, gepolsterten Formkörpern bekannt, bei dem eine tragende Schicht aus einem verstärkten Thermoplasten und eine Auflage aus einem Weichschaum in einem Preßvorgang verformt werden. Gegebenenfalls kann dabei eine Dekorschicht im selben Preßvorgang auf den Formkörper aufgebracht werden.

Weiterhin beschreibt die DE—A—32 35 525 einen Verbundwerkstoff aus einer tragenden Schicht aus einem mit Füllstoffen versehenen Polyolefin und einer Dekorschicht aus Weichmacher enthaltenden gegebenenfalls geschäumten Polyvinylchlorid. Zwecks Erzielung einer ausreichenden Haftung sind die Schichten durch eine mechanische Haftbrücke und eine Klebstoffschicht miteinander verbunden.

Alle diese Verfahren sind anwendbar für die Herstellung von schwach gekrümmten Formteilen, mit relativ einfacher Trägerkontur. Bei Formteilen mit einer komplizierten Kontur mit Löchern, Durchbrüchen und/oder bei denen eine Materialschicht über die andere herausragt, versagen diese an sich einfachen und schnellen Verarbeitungsverfahren. In diesen Fällen ist es erforderlich, den Schaumstoff bzw. das textile Flächengebilde nachträglich mit dem Träger zu verbinden. Dazu werden spezielle Kleber eingesetzt, die jedoch bei Polyolefinen nur nach entsprechender Vorbehandlung eine gute Haftung aufweisen. Ohne Vorbehandlung der Polyolefinoberfläche werden nur mäßige Haftfestigkeiten erreicht. Weiterhin sind die für Polyolefine geeigneten Kleber oftmals nicht dauerwärmebeständig.

Es war Aufgabe der Erfindung, ein Verfahren zur Herstellung von Schichtstoffen zu schaffen, welches von den geschilderten Mängeln frei ist und insbesondere eine absolut gleichwertige Festigkeit der Verbindung zwischen den Schichten in allen Teilbereichen gewährleistet.

Zur Lösung dieser Aufgabe werden die Maßnahmen nach dem Kennzeichen des Anspruchs 1 vorgeschlagen.

Zwar ist die Ultraschallschweißung beim Verbinden von Flächengebilden, die mit vernetzbaren Polymerisation und/oder härtbaren Harzen, d.h. harten Kunststoffen mit geringer Dämpfung behandelt sind, oder aus mit Kunststoff überzogenem Papier bestehen, an sich bekannt (DE—A—2 540 467, US—A—3 956 046), und man kennt auch Verbundstoffe mit einer Oberschicht und einer Unterschicht aus ultraschallschweißbarem Material, zwischen die während ihrer Verschweißung Materialsstränge, beispielsweise aus Schaumstoffen oder Textilstoffen, zwischen die Schweißnähte eingelegt werden (EP—A—0 022 896). Nach dem erfindungsgemäßen Verfahren wird jedoch ein direktes Verbinden von Schaumstoffen oder Textilstoffen (Schicht B) mit einem Flächengebilde aus faserverstärktem und gegebenenfalls füllstoffhaltigem thermoplastischem Kunststoff · (Schicht A) erreicht.

Die Schicht A kann aus allen thermoplastisch vorformbaren Materialien bestehen, z.B. aus Olefinpolymerisaten, wie Polyethylen oder Polypropylen, Styrolpolymerisaten, wie Polystyrol, Copolymerisaten des Styrols mit Acrylnitrol, Maleinsäureanhydrid, Methylmethacrylat oder α-Methylstyrol, oder kautschukmodifizierten Styrolpolymerisaten, Chlor enthaltenden Polymerisaten, wie Polyvinylchlorid, Polyvinylidenchlorid oder chlorierten Polyolefinen, Polyamiden, Polycarbonat, Polymethylmethacrylat, Polyestern sowie Mischungen dieser Polymerisate.

Die thermoplastischen Kunststoffe sollen faserverstärkt sein. Vorzugsweise verwendet man dazu Langfasern, Matten, Filze oder Gewebe aus Glas, Kohlenstoff, Steinwolle oder Asbest. Es sind auch textile Fasern, wie Wolle, Baumwolle oder synthetische Fasern geeignet. Bevorzugt sind langfaserige Substanzen mit Faserlängen von 10 mm oder mehr. Der Anteil an faserigen Substanzen in der Schicht A soll vorzugsweise 10 bis 50 Gew.% betragen. Glasfasern können mit den üblichen Schlichten und Kopplungsmitteln auf Siliconbasis vorbehandelt sein. Außer Fasern kann die Schicht A noch die üblichen Zusatzstoffe, wie Farbstoffe, Pigmente, Füllstoffe, Flammschutzmittel, Antistatika, Gleitmittel und Stabilisatoren enthalten.

Die Herstellung der Schicht A geschieht auf bekannte Weise durch Imprägnieren, Beschichten oder Tränken der Fasern mit geschmolzenen Thermoplasten oder einer Thermoplastdispersion. Vorteilhaft kann man z.B. eine Bahn aus Glasfasermatten durch Extrusion aus einer Breitschlitzdüse mit der Thermoplastschmelze kontinuierlich beschichten. Zur Verbesserung der Witterungsbeständigkeit oder des Aussehens kann auf der Oberfläche noch eine — gegebenenfalls eingefärbte — Folie aufgebracht werden.

Die Schicht B besteht aus einem geschäumten Kunststoff, beispielsweise aus einem Weichschaum mit einem Raumgewicht von etwa 10 bis etwa 80 kg/m³ oder au einem textilen Flächengebilde. Weichschäume im Sinne der Erfindung sind vorzugsweise solche auf Basis von Polyurethanen oder Polyolefinen sowie Weichmacher enthaltendes Polyvinylchlorid, das gegebenenfalls durch Zusatz von Styrolcopolymeren, wie Styrol-Acrylnitril-Copolymerisat, Acrylnitril-Butadien-Styrol-Copolymerisat, Acrylnitril-Styrol-Acrylester-Copolymerisat oder Pfropfkautschuken zur Schlagzähmodifizierung oder durch Zusatz von gesättigten Polyestern zur Verbesserung der Verarbeitbarkeit modifiziert sein kann. Geeignete Weichmacher sind beispielsweise Trikzesylphosphat, Phthalsäureester oder Ester aliphatischer Dicarbonsäuren. Das Weich-PVC kann außerdem noch übliche Stabilisatoren und Pigmente enthalten.

Unter textilen Flächengebilden werden insbesondere Gewebe, Gewirke, Matten, Filze, Vliese, oder Teppiche verstanden. Das Flächengewicht dieser Textilien liegt im allgemeinen zwischen 50 und 500 g/m², vorzugsweise zwichen 100 und 300 g/m². Die textilen Flächengebilde bestehen aus natürlichen oder synthetischen Fasern, wie Wolle, Baumwolle, Polyester, Polyamid, Polypropylen, Polyacrylnitril, sowie aus Mischungen verschiedener Faserarten. Der Titer dieser Fasern beträgt zwischen 30 dtex für feine Bezugstoffe und etwa 1400 dtex für Teppiche. Zudem können die textilen Flächengebilde eine Rückenbeschichtung aufweisen, z.B. aus einem offenzelligen Weichschaum.

Die Dicke der Schichten kann je nach Anwendungsgebiet in weiten Grenzen variieren; vorzugsweise soll die Schicht A etwa 1 bis 10 mm und die Schicht B etwa 1 bis 200 mm dick sein.

Bei dem erfindungsgemäßen Verfahren werden die zu verbindenden Schicht A und B in an sich üblicher Weise aufeinandergelegt und im allgemeinen unter leichtem Andrücken, wobei meist ein Druck von 1 bis 30 bar, insbesondere von 2 bis 15 bar, ausreicht, der Einwirkung von Ultraschall ausgesetzt. Dabei können übliche Ultraschallgeräte mit Sonotroden aus Titan oder Titanlegierungen bzw. Aluminiumlegierungen verwendet werden. Der Frequenzbereich liegt zweckmäßig zwischen 10 und 40, vorteilhaft zwischen 18 und 25 KHz. Auch der Amplitudenbereich des Ultraschalls liegt meist im üblichen Bereich und soll im allgemeinen mindestens 5, vorzugsweise 20 bis 40 µm betragen.

Während der Ultraschallschweißung wird die Oberfläche wenigstens einer Schicht A oder B durch ein gasförmiges Medium gekühlt, um ein Anhaften insbesondere der Schicht B an der Sonotrode zu vermeiden. Hierfür ist eine entsprechende flexible Rohrleitung an die Preßeinrichtung angeschlossen, so daß bei synchroner Bewegung mit der Sonotrode ein optimaler Kühleffekt erzielt wird. Die Halterung für die Rohrleitung kann gleichzeitig einen Niederhalter tragen, der den Schaumstoff bzw. das Textil im Bereich der Kontaktflächen der Sonotrode komprimiert. Durch ein Voreilen des Niederhalters ist das Aufsetzen der Sonotrode auf definiert vorverdichteten Bereichen der Schaumstoffschicht bzw. des textilen Flächengebildes möglich.

Als gasförmiges Medium kommt insbesondere Luft in Betracht. Um den Luftverbrauch zu minimieren kann ein taktweises Kühlen der Kontaktflächen z.B. ab einer bestimmte Beschallungszeit, eingestellt werden. Auf diese Weise können beispeilsweise eine Schicht A mit einer Dicke vom ·4 mm und eine Schicht B mit einer Dicke von 15 mm bei einer Amplitudentransformation von 2,5:1 und einem Druck von 10 bar innerhalb einer Sekunde miteinander verschweißt werden.

Nach einem weiteren ·Merkmal der Erfindung wird zwischen die Schicht A und die Schicht B eine Zwischenschicht C eingebracht, die aus einem thermoplastischen Kunststoff besteht, der zu den Kunststoffen der Schichten A und B affin ist. Das Einbringen einer Zwischenschicht C ist insbesondere dann von Vorteil, wenn die Schicht A aus schlecht fließenden Kunststoffen besteht oder wenn der Schichtstoff besonderen Anforderungen, beispielsweise Beständigkeit gegenüber Kohlenwasserstoffen, genügen muß. Als Zwischenschicht kann z.B. eine Folie aus Polyurethan, oder aus chloriertem Polyethylen verwendet werden.

Es war überraschend, daß unter der Einwirkung von Ultraschall und eines gasförmigen Kühlmediums Schichten aus sonst vollständig unverträglichen Kunststoffen miteinander verschweißt werden können, da dies unter der Einwirkung allein von Wärme und Druck oder durch Hochfrequenzverschweißung nicht bzw. praktisch nicht möglich ist. Das Verbinden der Schichten erfolgt besonders rasch, d.h. rascher als die Hochfrequenzverschweißung von flächigen Gebilden. Außerdem sind bei dem neuen Verfahren weder Vorwärmzeiten noch Abkühlzeiten erforderlich und Verfärbungen an den zu verschweißenden Schichten treten praktisch nicht auf. Eine verlängerte Haltezeit nach der Ultraschallschweißung kann darüber hinaus die Fugenahtqualität verbessern, da die Naht dann unter Druck durch die kaltbleibende Sonotrode gekühlt wird. Die erfindungsgemäß hergestellten Schichtstoffe können daher z.B. zur Herstellung von Wandverkleidungen, Kraftfahrzeug-Innenausstattungen, Fahrzeugsitze, in der Möbelindustrie sowie im Schiffsbau verwendet werden.

Beispiel 1

Auf eine Schallkapsel für einen Diesel-Pkw aus einem mit 30 Gew.% Glasmatten verstärken Polypropylen wird ein Schaumformteil aus einem offenzelligen PUR-Schaum aufgeschweißt. Der PUR-Shaum ist allseitig mit einer 25 µm dicken PUR-Folie ummantelt und dadurch wasser- und benzindicht. Im Bereich der Schweißnähte ist der Schaum, ausgehend von einer Dicke von 30 mm, bereits auf 5 mm vorverdichtet. Das Raumgewicht — im nicht verdichteten Bereich — beträgt 30 kg/m³.

Das Schaumteil wird mit Sonotroden von 4 mm Breite mit der zu schweißenden Naht entsprechender Form bei einem Schweißdruck von 12 bar in einer Zeit von 1 sec auf die Schicht aus verstärktem Polypropylen aufgeschweißt.

Schälversuche mit einem Rollenschälgerät ·nach DIN 53 289 ergaben Festigkeitswerte von 3 N/mm Nahtbreite. Der Bruch erfolgte vorwiegend im Schaumstoff.

### Beispiel 2

Zur Fertigung einer Rücksitzbanklehne für einen PKW wird eine tragende Schale aus einem mit 30 Gew.% Glasmatten verstärktem Polypropylen gepreßt. In diese Schale wird das Polstermaterial aus Polyurethanschaum gelegt und darüber ein textiles Flächengebilde gespannt. Das textile Flächengebilde besteht aus einem Gewirke aus Polyamidfasern mit einem Titer von 70 dtex. Das Flächengewicht beträgt 100 g/m². Die Verbindung des textilen Flächengebildes mit der Schale erfolgt mit Hilfe von Ultraschall.

Dazu wird eine Sonotrode von 60 mm Breite mit einer geriffelten Oberfläche eingesetzt. Der Anpreßdruck beträgt 2 bar, die Schweißzeit 0,3 sec.

Schälversuche an Proben, die unter gleichen Bedingungen hergestellt worden waren, ergaben Festigkeitswerte von 3 bis 4 N/mm Nahtbreite (Rollenschältest nach DIN 53 289). Der Anriß erfolgte vorwiegend im Textil.

### Patentansprüche

1. Verfahren zur Herstellung von Schichtstoffen, bei dem eine Schicht A aus einem faserverstärkten und ggf. füllstoffhaltigen thermoplastischen Kunststoff sowie eine Schicht B aus einem geschäumten Kunststoff oder einem textilen Flächengebilde miteinander verbunden werden, dadurch gekennzeichnet, daß die Schichten A und B unter Aneinanderdrücken der zu verbindenden Flächen durch Ultraschallschweißung verhaftet werden, wobei während der Ultraschallschweißung die Oberfläche wenigstens einer Schicht A oder B durch ein gasförmiges Medium gekühlt wird.

2. Verfahren nach Anspruch 1, dadurch gekennzeichnet, daß zwischen die Schicht A und die Schicht B eine Zwischenschicht C eingebracht wird, die aus einem thermoplastischen Kunststoff besteht, der zu den Kunststoffen der Schichten A und B affin ist.

### Revendications

1. Procédé de fabrication de stratifiés, dans lequel sont reliées l'une à l'autre une couche A en une matière thermoplastique renforcée par des fibres et éventuellement contenant des charges, ainsi qu'une couche B en une matière plastique expansée ou en un élément plat textile, caractérisé par le fait que les couches A et B sont attachées par soudure à ultra-sons en pressant l'une contre l'autre les surfaces à relier, la face superficielle d'au moins une couche A ou B étant, pendant la soudure par ultra-sons, refroidie par un fluide gazeux.

2. Procédé selon la revendication 1, caractérisé par le fait qu'entre la couche A et la couche B est introduite une couche intermédiaire C qui est en matière thermoplastique affine des matières plastiques des couches A et B.

### Claims

1. A process for manufacturing a laminate by bonding together a layer A formed from a fiber-reinforced and filler-free or -containing thermoplastic and a layer B formed from a foamed plastic or a textile sheet material, which comprises joining the surfaces of the layers A and B to each other by ultrasonic welding while cooling the surface of at least one layer A or B with a gaseous medium.

2. A process as claimed in claim 1, wherein there is introduced between layers A and B an interlayer C composed of a thermoplastic which has affinity for the plastics of layers A and B.